(19) Europäisches Patentamt
European Patent Office
Office européen des brevets

(11) **EP 4 369 544 A1**

(12) **EUROPEAN PATENT APPLICATION**

(43) Date of publication:
**15.05.2024   Bulletin 2024/20**

(21) Application number: **22206774.6**

(22) Date of filing: **10.11.2022**

(51) International Patent Classification (IPC):
**H02G 15/34** (2006.01)     **B64D 43/00** (2006.01)
**H01B 12/06** (2006.01)     H01B 7/30 (2006.01)
H01R 9/26 (2006.01)     H02G 15/06 (2006.01)
H01R 9/24 (2006.01)

(52) Cooperative Patent Classification (CPC):
**H02G 15/34; B64G 1/1021; B64G 4/00;**
H01B 12/06; H01R 4/68; H02G 15/06

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **NeutronStar Systems UG
50674 Köln (DE)**

(72) Inventors:
• **Collier-Wright, Marcus
50674 Köln (DE)**
• **La Rosa Betancourt, Manuel
50674 Köln (DE)**
• **Hindley, David
50674 Köln (DE)**
• **Schlachter, Sonja Isabell
76706 Dettenheim (DE)**

(74) Representative: **Sonnenberg Harrison
Partnerschaft mbB
Herzogspitalstraße 10a
80331 München (DE)**

(54) **SUPERCONDUCTING HARNESS**

(57)     A superconducting harness is provided for electrically interconnecting subcircuits of an electrical circuitry, the subcircuits being arranged at different temperatures. The superconducting harness comprises a superconducting cable comprising at least one superconducting tape and a jacket arranged about the at least one superconducting tape. Connectors are electrically connected to the at least one superconducting tape at either one of ends of the superconducting tape. At least one support element is provided to mechanically support the superconducting harness on a surrounding structure. The connectors comprise at least one contact block and a base plate. The at least one contact block is electrically connected to the at least one superconducting tape and configured to be electrically connected to the subcircuits of the electrical circuitry, and the at least one contact block is thermally connected to the base plate for providing a heat sink.

FIG. 1

EP 4 369 544 A1

## Description

FIELD OF THE INVENTION

The field of the invention relates to a superconducting harness and a connector for a superconducting harness.

BACKGROUND OF THE INVENTION

Modern spacecrafts include systems using superconductors to fulfil increasing requirements for future space missions. Low temperature superconductors (LTSs) are, for example, used to implement adiabatic demagnetization cooling devices onboard the spacecraft. Heat transmitted to the low temperature superconductors from any other component of the spacecraft needs to be minimised to ensure unrestricted functionality of the systems using the low temperature superconductors.

One space application requiring cooling is the operation at 50 mK of a microcalorimeter array for X-ray spectrometry. The microcalorimeter may include X-ray absorbers of less than 1 mm$^2$ in surface area. At 50 mK, the absorbance of a single photon causes a detectable change in temperature of the absorber. The cooling of the microcalorimeter is achieved by adiabatic demagnetization cooling and using a helium cryostat. The helium cryostat has a shell-in-shell architecture that provides a series of cooling stages. These cooling stages require high electric currents, e.g., up to 2 A, via electric wires to provide sufficient cooling power. Simultaneously, however, the generation and/or influx of heat via the electric wires in the cooling stages must be restricted for the sake of longevity of the helium cryostat and for avoiding exceeding the cooling capacities of the cooling stages. According to the Wiedemann-Franz law $k/\sigma = LT$ (the ratio of thermal conductivity $k$ to electrical conductivity $\sigma$ is proportional to temperature $T$), conventional metal leads for supplying the electric power do not meet these restrictions on thermal conductivity and/or generation of heat.

Most of the heat transmitted to the low temperature superconductors is transmitted via the electric connection to the energy distribution system of the spacecraft.

The prior art discloses solutions using high temperature superconductor (HTS) wires with special connectors to transmit energy from the spacecraft's energy distribution system to the low temperature superconductors while reducing the heat transmitted from the energy distribution system of the spacecraft to the low temperature superconductors.

One example of such HTS wire is an HTS tape derived from commercially available coated conductors. Such an HTS tape has a degree of flexibility and tensile strength due to the presence of a substrate on which the HTS is arranged. A coated conductor made from YBCO (Yttrium barium copper oxide) has been used as HTS tape (see Canavan et al., Cryogenics 64 (2014) 194-200, DOI:10.1016/j.cryogenics.2014.06.003).

SUMMARY OF THE INVENTION

The present document describes a superconducting harness for further reducing the heat transmitted via the superconducting harness. The present disclosure aims at reducing a heat load on an interface to a low-temperature superconductor for powering, e.g., an adiabatic demagnetization refrigerator of a cryocooling chain. This reduction enables a more efficient operation of the cryocooling chain. The object is achieved by the superconducting harness according to the present disclosure.

A superconducting harness for electrically interconnecting subcircuits of an electrical circuitry is disclosed. The subcircuits are arranged at different temperatures. The superconducting harness comprises: a superconducting cable comprising at least one superconducting tape and a jacket arranged about the at least one superconducting tape; connectors, electrically connected to the at least one superconducting tape at either one of ends of the superconducting tape; at least one support element to mechanically support the superconducting harness on a surrounding structure; wherein the connectors comprise at least one contact block and a base plate, the at least one contact block being electrically connected to the at least one superconducting tape and configured to be electrically connected to the subcircuits of the electrical circuitry, and the at least one contact block is thermally connected to the base plate for providing a heat sink.

A width of the at least one superconducting tape may vary between the first end to the second end.

Part of the superconducting wire may have a meander-like shape.

The at least one contact block may be made of copper.

The at least one base plate may be made of copper.

The connector may be dimensioned to provide a heat sink.

An electrically insulating element may be provided between the at least one contact block and the base plate, wherein the electrically insulating element is thermally conducting.

The electrically insulating element may be made of aluminium nitride.

The jacket may comprise a coating and an encapsulation for protecting the superconducting tape against humidity and providing the superconducting tape with mechanical strength.

The coating may be made of Parylene or a derivative thereof.

The encapsulation may be made of Kapton.

The encapsulation may comprise two layers and the superconducting wire may be laminated between the two layers.

The superconducting cable may have at least in part a meander-like shape.

The superconducting tape may comprise rare-earth barium copper oxide.

The rare-earth element in the rare-earth barium copper oxide may be selected from the group consisting of yttrium (Y), gadolinium (Gd), samarium (Sm), or neodymium (Nd).

The material, of which the at least one supporting element is made, may be selected depending on the temperature of the superconducting cable at which the at least one supporting element is arranged.

The material, of which the at least one support element is made, may be thermally conducting, when the at least one support element is arranged at a position close to a cold end of the superconducting cable to increase a thermal conductance of the at least one support element.

The material, of which the at least one support element is made, may be thermally insulating, when the at least one support element is arranged at a position close to a warm end of the superconducting cable to increase a thermal resistance of the at least one support element.

## DESCRIPTION OF THE FIGURES

FIG. 1 shows a view of an aspect of a superconducting harness.

FIG. 2 shows superconducting tapes having varying widths.

FIG. 3 shows a structure of a superconducting tape used for the superconducting harness.

FIG. 4 shows an aspect of a support element for mechanically supporting the superconducting harness.

FIG. 5 shows an exploded view of an aspect of a connector of the superconducting harness for connecting the superconducting harness to electrical circuitry.

FIG. 6 shows a perspective view of the connector shown in FIG. 5.

FIG. 7 shows a further aspect of the connector of the superconducting harness.

FIG. 8 shows an explosion view of another aspect of the support element.

## DETAILED DESCRIPTION OF THE INVENTION

The invention will now be described on the basis of the figures. It will be understood that the embodiments and aspects of the invention described herein are only examples and do not limit the protective scope of the claims in any way. The invention is defined by the claims and their equivalents. It will be understood that features of one aspect or embodiment of the invention can be combined with a feature of a different aspect or aspects and/or embodiments of the invention.

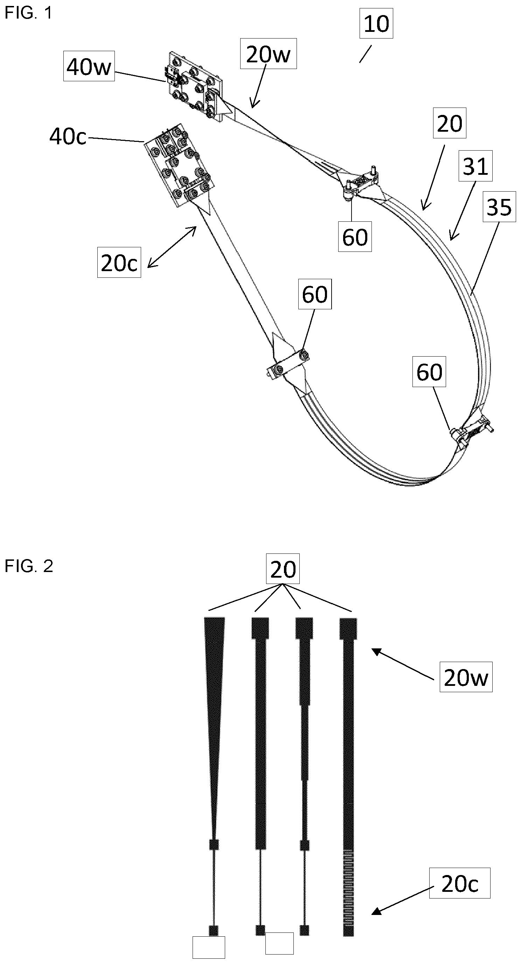

FIG. 1 shows a view of a first aspect of a superconducting harness 10. The superconducting harness 10 provides an electrical connection between a power source and a cryocooling chain (not shown). In one aspect, the superconducting harness 10 provides an electrical connection between ohmic lead-in wires at a warm end 20w of the superconducting harness 10 and a low-temperature superconductor used in an adiabatic demagnetization refrigerator (ADR) of the cryocooling chain at a cold end 20c of the superconducting harness 10. The superconducting harness 10 has a temperature gradient along a longitudinal extension of the superconducting harness 10 between a cold end 20c and a warm end 20w of the superconducting harness 10.

The superconducting harness 10 comprises at least one superconducting tape 20 and a jacket 31, 35 arranged about the at least one superconducting tape 20. The assembly of the superconducting tape 20 and the jacket 31, 35 is also referred to as superconducting cable 20, 31, 35.

The superconducting cable 20, 31, 35 may have a non-limiting length of at least 10 cm. In a non-superconducting state, the superconducting cable 20, 31 35 is configured to withstand an electrical connection at an rms voltage of approximately 200V with a current of 100 mA. A heat load at the cold end 20c of the superconducting cable 20, 31, 35 at a temperature of 4-8 K is preferably no more than 1 mW. The heat load at an intermediate position along the longitudinal extension (or the length) of the superconducting cable 20, 31, 35, e.g., at the temperature of 30 K, preferably does not exceed 20 mW. The heat load capacity at a warm end 20w of the superconducting cable 20, 31, 35 at a temperature of approximately 85-93 K is preferably up to 800 mW. The cold end 20c of the superconducting cable 20, 31, 35 preferably operates at a temperature of no more than 8 K. The warm end 20w of the superconducting cable 20, 31, 35 preferably operates at a temperature of no more than 85 K. In general, the temperature, at which the warm end 20w of the superconducting cable 20, 31, 35 operates, depends on a temperature margin to a critical temperature $T_C$ of the superconducting tape 20. The temperature margin enables the superconducting cable 20, 31, 35 to accommodate for unintended incidences such as transitions of the superconducting cable 20, 31, 35 to a non-superconducting state. If the critical temperature $T_C$ of the superconducting tape 20 is sufficiently high, the operating temperature of the warm end 20w may exceed 85 K.

In one aspect, two of the at least one superconducting tape 20 is arranged in the superconducting harness 10. Arranging the two superconducting tapes 20 in the superconducting harness 10 enables forming an electrical circuit comprising a power source and a cryocooling chain, to which a device such as an adiabatic demagnetization refrigerator is connected. This aspect of the superconducting harness 10 having two superconducting tapes 20 is described in detail below with reference to the drawings. In another aspect, the superconducting harness 10 may comprise a single one of the superconducting tapes 20, and the electrical circuit is formed (closed) using further electrical conductors, e.g., further superconducting conductors.

The superconducting harness 10 further comprises a connector 40w, 40c at either end 20c, 20w of the at least one superconducting tape 20. The superconducting harness 10 may comprise one or more support elements 60.

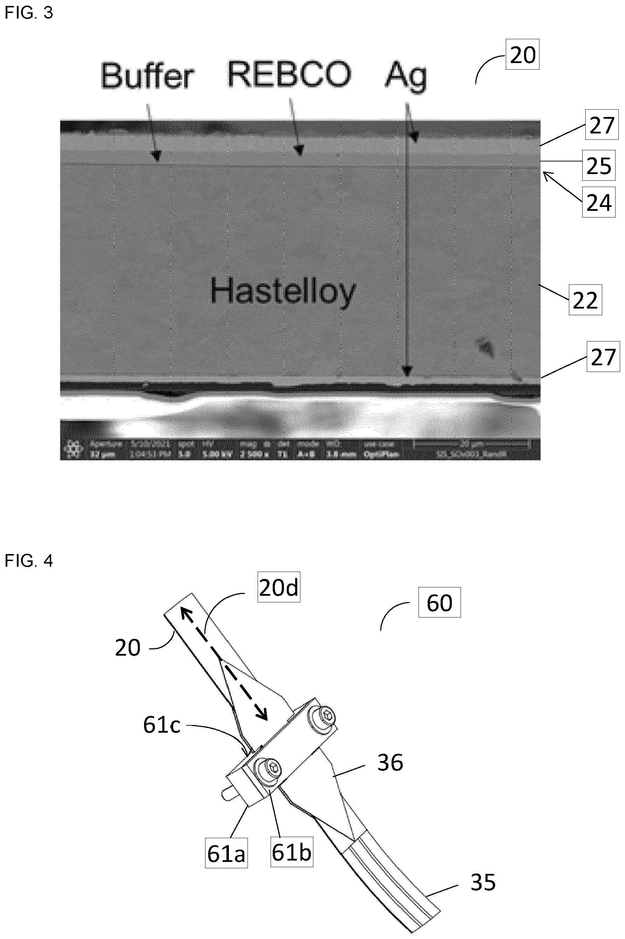

As shown in FIG. 3, the at least one superconducting tape 20 has layered structure. The at least one superconducting tape 20 comprises a substrate layer 22, a superconducting layer 25, and at least one cap or cover layer 27. The superconducting tape 20 may comprise a buffer layer 24 between the substrate 22 and the superconducting layer 25.

The at least one superconducting tape 20 may have an overall thickness of up to between 40 $\mu$m and 200 $\mu$m.

The at least one superconducting tape 20 provides an electrical connection between at least two cooling stages. The two cooling stages may be part of a series of cooling stages. Individual stages of the series of cooling are operated at different temperatures. In one aspect of the disclosure, a first stage may be operated at about 85 K, a second stage may be operated at about 30 K, and a third stage may be operated at about 4 K.

The at least one superconducting tape 20 may have a width in the range of 1 mm to 12 mm. However, the present disclosure is not limited to this range of widths. As shown in FIG. 2, in one aspect of the disclosure, the at least one superconducting tape 20 may have a varying width. The width of the at least one superconducting tape 20 may be greater at a warm end 20w of the at least one superconducting tape 20 than at the cold end 20c of the superconducting end. The greater width at the warm end 20w increases an electric current-carrying capability as well as a heat capacity and thus provides protection against sudden temperature increases and provides greater safety margin at higher temperatures. The varying width of the superconducting tape 20 may be achieved by laser-cutting the superconducting tape 20.

The at least one superconducting tape 20 may be a high-temperature superconducting (HTS) tape. The at least one superconducting tape 20 may have a critical temperature $T_C$ of at least 85 K. The varying width enables accommodating sudden increases in temperature or current, especially by making the warm end 20w of the at least one superconducting tape 20 wider, e.g., several times wider than the width at the cold end 20c.

Preferably, the at least one superconducting tape 20 may have a critical temperature $T_C$ of at least 89 K or 90 K, more preferably of at least 93 K. The superconducting layer 25 may have a critical current $I_C$ per mm-width of the at least one superconducting tape 20 (or per mm-width of the superconducting layer 25). The critical current $I_C$ per mm-width of the at least one superconducting tape 20 may be greater than 5 A/mm at 85 K.

Substrate layer

The substrate layer 22 of the at least one superconducting tape 20 may be made of a nickel alloy. In one aspect, the substrate layer 22 may be made of a nickel-molybdenum-chromium alloy with a high corrosion resistance, such as but not limited to Hastelloy® C276 manufactured by Haynes International. The substrate layer 22 may have a thickness of between 35 $\mu$m and 195 $\mu$m , such as between 30 $\mu$m and 190 $\mu$m, or between 20 $\mu$m and 150 $\mu$m.

Superconducting layer

The superconducting layer 25 of the at least one superconducting tape 20 is arranged on the substrate layer 22.

The superconducting layer 25 is made of a rare-earth barium copper oxide (REBCO). The REBCO layer may be used for a second-generation REBCO coated conductor. The rare-earth may be one of, but not limited to, yttrium (Y), gadolinium (Gd), samarium (Sm), or neodymium (Nd). One example of the REBCO is YBCO (Yttrium barium copper oxide), such as $YBa_2Cu_3O_{7-\delta}$; Other examples are LBCO (Lanthanum barium copper oxide), SBCO or Sm123 (Samarium barium copper oxide), NBCO (Neodymium barium copper oxide), GdBCO (Gadolinium barium copper oxide), or EBCO (Europium barium copper oxide). The REBCO layer may be doped. In one aspect of the disclosure, the REBCO layer is doped with barium zirconate; the dopant, however, is not limited thereto.

Cover layer

The at least one cover layer 27 is arranged on the superconducting layer 25. The at least one cover layer 27 may have a thickness of between 1 $\mu$m to 5 $\mu$m.

The at least one cover layer 27 may be made of silver (Ag) or a silver-gold (AgAu) alloy. The AgAu alloy may comprise 5% by weight of Au (AgAu5%).

The at least one cover layer 27 made of Ag provides a means for forming electrical connections, e.g., through soldering. The at least one cover layer 27 made of Ag furthermore serves as a shunt for bypassing the superconducting layer 25 in case of a quench (i.e., a sudden transition from a superconducting to an ohmic state of the at least one superconducting tape 20) of the superconducting layer 25 with transport currents. The at least one cover layer 27 made of Ag moreover may provide an electric contact or an electrical connection for the at least one superconducting tape 20.

The at least one cover layer 27 made of AgAu reduces a thermal conductivity of the at least one superconducting tape 20. Reducing the thermal conductivity enables operating the superconducting harness 10 with reduced heat load on the cold end 20c. According to one aspect of the present disclosure, the heat load at the cold end 20c may be as low as 0.1 $\mu$W.

In one aspect, a further one of the cover layers 27 may be arranged on an outward-facing surface of the substrate layer 22.

Buffer layer

In one aspect of the disclosure, a buffer layer 24 may be arranged between the substrate layer 22 and the superconducting layer 25 the at least one superconducting tape 20. The buffer layer 24 provides humidity protection and allows for ease of layering of the superconducting layer 25 with regards to the structure of the substrate layer 22. The buffer may provide a chemical barrier to prevent diffusion between the substrate layer 22 and superconducting layer 25. Furthermore, in IBAD (Ion Beam Assisted Deposition) processes or ISD (Inclined Substrate Deposition) processes, the buffer layer enables providing a biaxial texture of the superconducting layer 25. The biaxial texture of the superconducting layer 25 determines the critical current $I_C$ of the superconducting layer 25. The ease of application of the superconducting layer 25 results in improved conductivity of the superconducting layer 25.

Copper-plating of junction areas

The at least one superconducting tape 20 may be electroplated at one or both of the ends 20w and 20c with copper to generate junction areas (not shown) of the at least one superconducting tape 20. The copper-plating may have a thickness of approximately 5 $\mu$m.

The copper-plated junction areas at the warm end 20w and the cold end 20c facilitate soldering of the at least one superconducting tape 20 to the connectors 40w and 40c, respectively. A solder used for the soldering may be In97Ag03 (melting temperature 143°C) or Sn63Pb37 (melting temperature 189°C).

The copper-plating of the copper-plated junction areas acts as a chemical barrier that prevents Ag atoms from the at least one cover layer 27 from diffusing into the junction areas and thereby degrade the junction areas in terms of electrical resistivity and/or heat load.
In addition, a gold-plating may be applied on the copper-plating to prevent oxidation of the copper of the copper-plating.

Jacket

The jacket 31, 35 of the superconducting harness 10 has two components. A coating 31 is applied to the at least one superconducting tape 20. The coating 31 is configured to electrically insulate the at least one superconducting tape 20 as well as to protect the at least one superconducting tape 20 from humidity. The coating 31 is further configured such that a thermal conductance of the superconducting tape 20, in particular along the length or longitudinal extension of the superconducting tape 20, is not substantially affected. The coating 31 may have a thickness of between 1 $\mu$m and 50 $\mu$m.

The coating 31 may be made of Parylene or derivatives of Parylene, such as Parylene C or Parylene HT. Parylene C has a high dielectric strength (the breakdown voltage lies above 500 V for a layer of Parylene C of a thickness of less than 1 $\mu$m) and a low water vapor transmission rate (0.08 g mm/m$^2$/day). Parylene HT is resistant to high temperatures.

Parylene and its derivatives have a high breakdown voltage. By application of the Parylene coating 31 onto the at least one superconducting tape 20, a tight fit to the at least one superconducting tape 20 and good penetration (e.g., using Parylene HT) into geometrical irregularities in the at least one superconducting tape 20 is achieved. Parylene is applied at low temperatures to manufacture the coating 31. The low-temperature application avoids damage to the at least one superconducting tape 20 during the application of the Parylene. The Parylene coating 31 provides electrical insulation, a barrier against moisture, and protection against corrosion and chemical agents. The thermal conductivity of the at least one superconducting tape 20 coated with Parylene does not substantially increase. In particular, the thermal conductivity along a longitudinal extension direction 20d does not substantially increase for the at least one superconducting tape 20 coated with Parylene.

The Parylene coating 31 may be applied by chemical vapor deposition in an atmosphere of the monomer para-xylylene.

An encapsulation 35 is arranged at the coating 31. The encapsulation 35 is configured to provide mechanical strength and serve as a mechanical support. The mechanical strength provides protection from mechanical loads that may occur during handling of the superconducting harness 10, shaker tests, or space launch. In one aspect of the disclosure, the encapsulation 35 allows for bending or folding of the at least one superconducting tape 20 with a radius of about 5 cm.

The encapsulation 35 may be made of polyimide. One example of the polyimide is Kapton (by DuPont) which is widely available and has been extensively used in space due to is high radiation resistance, stability from about 4 K up to around 673 K, and suitable coefficient of thermal expansion relative to the at least one superconducting tape 20. The low thermal conductivity of Kapton further improves a thermal performance of the superconducting harness 10. The electrical insulation characteristics of polyimide do not affect the electrical conductivity of the at least one superconducting tape 20 and achieve voltage breakdown requirements for the at least one superconducting tape 20. The polyimide is applied at relatively low temperatures and thus reduces a risk of damaging the at least one superconducting tape 20 during application.

The encapsulation 35 made of the polyimide may be manufactured by laminating the at least one superconducting tape 20, to which the coating 31 has been applied, between two sheets of polyimide (Kapton) foil. The polyimide foil may have a thickness of about 125 $\mu$m. The sheets of the polyimide foil may be coated on one side with a hot sealing adhesive. The hot sealing adhesive may melt at 120°C. The lamination may thus require heating, e.g., up to 120°C, to melt the hot sealing adhesive. The encapsulation 35 does not significantly change the critical current $I_C$. The adhesion of the two polyimide foils resists transitions back and forth between room temperature and 4 K (crossing the boiling temperature of $LN_2$, 77K) without degradation of the adhesion or the forming of bubbles of $LN_2$.

In one aspect of the disclosure, one or more carbon-fibre-reinforced plastic (CFRP) strips can be arranged within the encapsulation 35 to provide further mechanical strength. The one or more CFRP strips may be laminated between the polyimide foils together with the coated at least one superconducting tape 20.

In one aspect of the disclosure, the jacket 31, 35 may further comprise at least one supporting plate 36. The at least one supporting plate 63 may be made of polyimide.

The supporting plate 36 may have a substantially hexagonal shape. The hexagonal shape may be elongate and substantially extending in a longitudinal extension direction 20d (see FIG. 4) in which the superconducting tape 20 extends. The ends of the supporting plate 36 in the longitudinal extension direction 20d may have a triangular shape. The supporting plate 36 may be assembled of two substantially triangular-shaped plates. The ends of the supporting plate 36 may have the shape of arrows pointing along the longitudinal extension direction 20d. The supporting plate 36 may have a substantially planar shape. The planar shape provides a contacting surface of the supporting plate 36 for contacting the superconducting cable 20, 31, 35. The hexagonal or arrow-like supporting plate 36 prevents sharp bending at edges of a contacting surface 61c of at least one support element 60 (described below). High mechanical loads on the superconducting cable 20, 31, 35 are hence avoided.

In one aspect, the supporting plate 63 may be laminated to the encapsulation 35 of the superconducting cable 20, 31, 35. The lamination of the supporting plate 36 to the superconducting cable 20, 31, 35 prevents longitudinal movement of the superconducting cable 20, 31, 35 in the longitudinal extension direction 20d when the superconducting harness 10 is held by the at least one support element 60 (see below). Providing at least one recess 36a in the supporting plate 36 contributes to preventing the longitudinal movement of the superconducting cable 20, 31, 35 in the longitudinal extension direction 20d.

Connectors

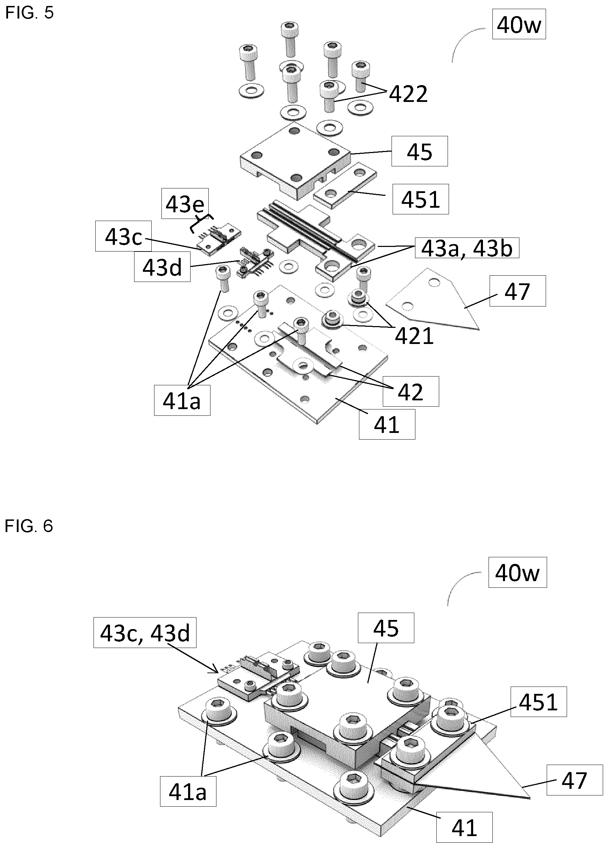

FIGS. 5 to 7 show the connector 40w, 40c. The connector 40w, 40c provides an electrical connection to the superconducting harness 10. The connector 40w, 40c is configured to provide a heat sink as well as to minimise an electrical resistance and reduce mass of the connector 40w, 40c.

The connector 40w, 40c may comprise screwed fastenings 41a, 422 with a high thermal conductivity. The screwed fastenings 41a, 422 serve to mount to surrounding structure, and/or assemble, the connector 403, 40c. The surrounding structure may be a structure of the cryocooling chain. The connector 40w, 40c comprises contact blocks 43a, 43b that electrically conductive. The contact blocks 43a, 43b may be configured to provide a large surface area for electrical connectivity to and from the harness 10. The contact blocks 43a, 43b may further be configured to increase a thermal sinking capacity of the connector 40w, 40c. The contact blocks 43a, 43b may be made of copper.

The connector comprises a base plate 41. The base plate 41 may be made of copper. The base plate 41 may be mounted by means of screws 41a to, e.g., the structure of a cryostat (not shown) of the cryocooling chain. The screws 41a may be made of stainless steel. Stainless steel reduces the risk of debris from the screws 41a that may cause short circuits.

The connector 40w, 40c comprises an electrically insulating element 42, which is provided between the contact blocks 43a, 43b and the base plate 41. The electrically insulating element 42 electrically insulates the electrically conducting contact blocks 43a, 43b of the connector 40w, 40c from the base plate 41. In FIG. 5, the electrically insulating element 42 is shown as including two components. However, the electrically insulating element 42 is not limited thereto. In other aspects of the disclosure, the electrically insulating element 42 may be a one-piece member or may include three or more components.

The electrically insulating element 42 may be made of aluminium nitride (AlN). The AlN electrically insulating element 42 provides a thermal conductivity between the electrically conductive contact blocks 43a, 43b and the base plate 41. The AlN electrically insulating element 42 enables a scalability of the design of the superconducting harness 10 to a range of heat load capacities, including higher heat load capacities, of the superconducting harness 10. AlN has lower thermal length changes than copper. The thermal length change for AlN between 4 K and 300 K is approximately 0.433 mm/m, compared to 3.37 mm/m for copper.

In an aspect of the disclosure, a foil (not shown) may be provided between the AlN electrically insulating element 42 and one or both of the contact blocks 43a, 43b and the base plate 41 to increase thermal conductivity at a contacting surface. The foil may be made of indium (In) or an indium-silver alloy, e.g., In97Ag03. Indium and indium-silver alloys are soft and ductile and are capable of sustaining temperature gradients without cracking. Alternatively, thermal greases and/or thermally conductive glues, e.g., Epotek H20E or Stycast 2850FT, may be used to provide thermal conductivity between the AlN electrically insulating element 42 and one or both of the contact blocks 43a, 43b and the base plate 41.

For forming the electrical connections of the connector 40w, 40c to the superconducting harness 10 and/or to the cryocooling chain (not shown) or a power source (not shown), soldering may be used. Soldered ones of the electrical connections are easy to provide. Furthermore, solders, such as indium, may be used that do not require high temperatures for application. At the cold end 20c, solders, such as tin-lead alloys, e.g., Sn60Pb40, or tin-silver alloys, e.g., Sn97Ag3, may be used which are superconducting at an operating temperature of the superconducting harness 10. In case the junction areas are gold-plated or gold-coated, an indium-based solder, such as an indium-lead (InPb) or an indium-silver (InAg) solder, is preferred. The tin-lead alloys are not used as solders for soldering gold-plated junction areas as the gold-plating may be dissolved in the tin-lead-alloy solder.

The connectors 40w, 40c at the warm end 20w and the cold end 20c of the superconducting harness 10 may have a similar design. The two superconducting tapes 20 of the superconducting harness 10 are soldered to one of the contact blocks 43a, 43b of the connector 40w, 40c to provide an electrical connection between the superconducting tapes 20 and the contact blocks 43a, 43b. The contact blocks 43a, 43b may be mounted to the connector 40w, 40c, e.g., to the base plate 41, by means of clamp elements 45. The clamp element 45 may further hold the encapsulation 35, e.g., the polyimide encapsulation 35, for reducing mechanical strain one the superconducting harness 10. The clamp element 45 may be electrically insulating. The clamp element 45 may be made of fibre-reinforced plastic (fiberglass).

In one aspect of the disclosure, the clamp element 45 attaches the contact blocks 43a, 43b to the connector 40w, 40c, and a further clamp 451 holds the encapsulation 35 by clamping the encapsulation to the contact blocks 43a, 43b. The further clamp element 451 may be electrically insulating. The further clamp element 451 may be made of fibreglass laminate, e.g., G-10. The further clamp 451 may further hold a support structure 47 for supporting the superconducting tape 20 by clamping the support structure 47 to the contact blocks 43a, 43b. Moreover, the sections of the contact blocks 43a, 43b, to which the encapsulation 35 and possibly the support structure 47 are clamped, may be insulated from the base plate 41 by at least one insulating flanged bushing 421 having an inner thread into which screws 422 may be screwed for clamping the clamp 451 to the contact blocks 43a, 43b. The insulating flanged bushing 421 electrically insulates the contact blocks 43a, 43b from the base plate 41. The flange portion of the insulating flanged bushing 421 spaces the base plate 41 and the contact blocks 43a, 43b apart. The at least one insulating flanged bushing 421 may be made of a fibreglass laminate, e.g., G-10. The screws 422 may be made of stainless steel. Stainless steel reduces the risk of debris from the screws 422 that may cause short circuits.

The support structure 47 may have a substantially triangular shape. The triangular shape may be so mounted to the connector 40w, 40c that the support structure 47 is held by the connector 40w, 40c at a base of the triangular shape and the other two sides of the triangular shape form a vertex of the triangular shape in the longitudinal extension direction 20d (see FIG. 4) in which the at least one superconducting tape 20 extends. The support structure 47 may be made of a polyimide, such as but not limited to Kapton.

As shown in FIGS. 5 and 6, the connector 40w at the warm end 20w of the superconducting harness 10 provides a removable electrical connection, e.g., for electrically connecting the superconducting harness 10 to a power source (not shown). The electrical connection to the power source may be provided by PhBr (phosphor bronze) wires 43e. The PhBr wires 43e carry an ohmic current upstream of the warm end 20w of the superconducting cable 20, 31, 35.

In one aspect of the disclosure, the connector 40w may further comprise connector elements 43c, 43d to provide the removable electrical connection (e.g., a Series 171 plug- and-socket connector by Glenair which is widely used in space applications and has a small and lightweight design). The connector elements 43c, 43d may comprise pins, e.g., three, for incoming ones of the PhBr wires 43e. The connector elements 43c, 43d may comprise pins, e.g., three, for outgoing PhBr wires 43e. Ones of the PhBr wires 43e may be specified for a current of 3 A. The PhBr wires 43e are soldered to the pins of one 43c of the connector elements 43c, 43d (e.g., 171-001-13PS-CLMH by Glenair which has the pins hidden in a housing).

The other 43d of the connector elements 43c, 43d has socket contacts (e.g., Glenair 171-001-13SS-CLMH by Glenair) to which copper (Cu) wires (not shown) are soldered. The Cu wires are connected to the contact blocks 43a, 43b at a side of the contact blocks 43a, 43b that opposes another side of the contact blocks 43a, 43b to which the two superconducting tapes 20 are soldered.

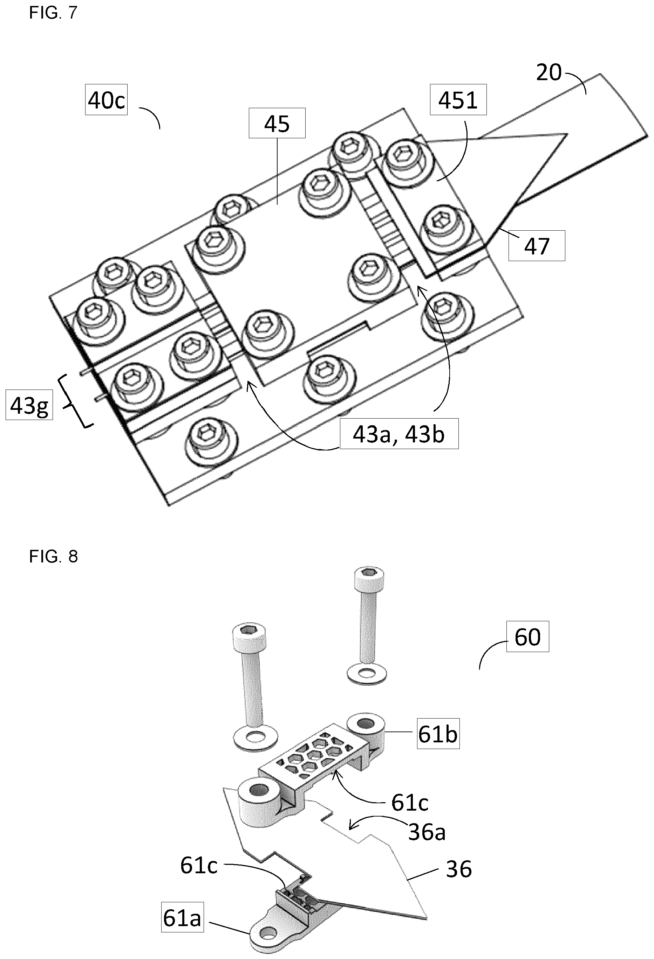

As shown in FIG. 7, the connector 40c at the cold end 20c is electrically connected to the electrical circuit, e.g., a cooling stage (not shown) of the cryocooling chain, by means of niobium titanium (NbTi) superconducting wires 43g. The NbTi superconducting wires 43g are soldered to the contact blocks 43a, 34b to provide an electrical connection between the connector 40c and a cold stage of the cryocooling chain. The NbTi superconducting wires 43g may be multifilament wires. The NbTi superconducting wires 43g may comprise insulation.

The at least one superconducting tape 20 is electrically connected to the connector 40c in a similar manner as in the case of the connector 40w (see above).

The connector 40w, 40c may further comprise a housing (not shown) to provide electrical insulation from an environment.

Support element

The at least one support element 60 may be used for routing the at least one superconducting cable 20, 31, 35. The one or more support elements 60 may fix the at least one superconducting cable 20, 31, 35 mechanically to the surrounding structure.

As shown in FIGS. 4 and 8, the at least one support element 60 may have an upper bracket 61a and a lower bracket 61b. The at least one support element 60 may be arranged at the superconducting cable 20, 31, 35 at the at least one supporting plate 36 of the jacket 31, 35. In an assembled state of the support element 60, the superconducting tape 20, 31, 35 is held at the supporting plate 36 by the upper bracket 61a and the lower bracket 61b.

In the assembled state of the support element 60, the upper bracket 61a and the lower bracket 61b sandwich the superconducting cable 20, 31, 35 and fix the superconducting cable 20, 31, 35 to the support element 60. Thereby, the superconducting cable 20, 31, 35 may be fixed to the surrounding structure. The upper bracket 61a and/or lower bracket 61b have contacting surfaces 61c that contact the superconducting cable 20, 31, 35 in the assembled state of the support element 60. The contacting surfaces 61c spread any contacting force from the support element 60 onto the superconducting cable 20, 31, 35 across the contacting surfaces 61c and hence across the encapsulation 35 of the superconducting cable 20, 31 35. The contacting surface 61c may have a solid surface (see FIG. 4) or a mesh-like structure (see FIG. 8).

The superconducting cable 20, 31, 35 is clamped between the upper bracket 61a and lower bracket 61b. The contacting surfaces 61c and the contacting surface of the at least one supporting plate 36 spread a clamping force from the support element 60 over a surface area of the encapsulation 35. The superconducting cable 20, 31, 35 is thereby fixed in place whilst reducing mechanical load on the at least one superconducting tape 20.

The at least one support element 60 may be arranged along the length (the longitudinal extension) of the superconducting cable 20, 31, 35. A distance between two of the at least one support element 60 arranged along the length (the longitudinal extension) of the superconducting cable 20, 31, 35 may be in the range of between 10 cm and 25 cm, but the distance is not limited thereto.

The at least one support element 60 fixes the superconducting cable 20, 31, 35 to the surrounding structure, e.g., the structure of the cryocooling chain, by connecting the at least one support element 60, e.g., the lower bracket 61a, to the surrounding structure. The surrounding structure, to which the at least one support element 60 is connected, will affect a temperature of the at least one support element 60. The temperature of the surrounding structure depends on the cooling stage the surrounding structure is associated with. Depending on the temperature of the surrounding structure, the material is chosen of which the at least one support element 60, in particular, the lower bracket 61a and the upper bracket 61b, are made.

For example, if the temperature of the at least one support element 60 is approximately 30 K, the lower bracket 61a and the upper bracket 61b may be made of a thermally conducting material such as aluminium to allow dissipation of heat coming from the warm end 20w. The at least one support element 60 hence may act as a heat sink. The contacting surfaces 61c between the superconducting cable 20, 31, 35 and the aluminium support element 60 are firmly held together, e.g., by clamping, to ensure a good thermal contact. By arranging a foil made of indium or In97Ag3 between the aluminium support element 60 and superconducting cable 20, 31, 35, the thermal contact can be further improved.

If the temperature of the at least one support element 60 is approximately 80 K, the lower bracket 61a and the upper bracket 61b may be made of a thermally insulating material such as Polyether Ether Ketone (PEEK). PEEK has a lower thermal conductivity than Aluminium. At the temperature of approximately 80 K, the thermal resistance between the superconducting cable 20, 31, 35 and the cooling stage of the cryocooling chain is preferably high to avoid heat flow to the superconducting cable 20, 31, 35. Therefore, the contacting surface 61c between the PEEK support element 60 and the encapsulation 35 of the superconducting cable 20, 31, 35 is reduced by the mesh-like structure of the contacting surface 61c (see FIG. 8).

In one aspect of the disclosure, two of the at least one support element 60 made of PEEK may be arranged at a temperature of close to 80 K. Another one of the at least one support element 60 made of aluminium may be arranged at a temperature of approximately 30 K. But the invention is not limited to arranging the at least one support element 60 at these temperatures. The temperatures depend on a temperature of the cooling stage to which the at least one support element 60 is mounted.

The aluminium support element 60 is preferably arranged at a distance from the cold end 20c. The longer this distance the higher the thermal resistance between the aluminium support element 60 and the cold end 20c. The higher thermal resistance results in lower thermal loads on the superconducting harness 10 at the cold end 20c and hence on the corresponding cooling stage of the cryocooling chain.

The thermal behaviour of the at least one support element 60 has contributes to the overall thermal performance of the superconducting harness 10. The materials from which at least one support element 60 is made, may have a thermal conductivity of about an order of magnitude higher than the superconducting cable 20, 31, 35. In one aspect of the disclosure, the sinking capability of the at least one support element 60 made of aluminium is arranged at a temperature of approximately 30 K, is increased by making the at least one support element 60 from aluminium which has a high thermal conductivity and mechanical robustness.

Reference numerals

| 10 | superconducting harness |
| 20 | superconducting tape |
| 20c | cold end |
| 20w | warm end |
| 20d | longitudinal extension direction |
| 22 | substrate layer |
| 24 | buffer layer |
| 25 | superconducting layer |
| 27 | cover layer |
| 31, 35 | jacket |
| 31 | coating |
| 35 | encapsulation |
| 36 | supporting plate |
| 36a | recess |
| 40w | cold end connector |
| 40c | warm end connector |
| 41 | baseplate |
| 42 | electrically insulating element |
| 43a, 43b | contact blocks |
| 43c, 43d | connector elements |
| 43e | PhBr wires |
| 43g | NbTi wires |
| 45a, 45b | clamp elements |
| 47 | support structure |
| 60 | support element |
| 61a, 61b | lower bracket, upper bracket |
| 61c | contacting surfaces |

## Claims

1. A superconducting harness (10) for electrically interconnecting subcircuits of an electrical circuitry, the subcircuits being arranged at different temperatures, the superconducting harness (10) comprising:

   a superconducting cable (20, 31, 35) comprising at least one superconducting tape (20) and a jacket (31, 35) arranged about the at least one superconducting tape (20);
   connectors (40c, 40w), electrically connected to the at least one superconducting tape (20) at either one of ends (20c, 20w) of the superconducting tape (20);
   at least one support element (60) to mechanically support the superconducting harness (10) on a surrounding structure;

   wherein the connectors (40c, 40w) comprise at least one contact block (43a, 43b) and a base plate (41),

   the at least one contact block (43a, 43b) being electrically connected to the at least one superconducting tape (20) and configured to be electrically connected to the subcircuits of the electrical circuitry, and
   the at least one contact block (43a, 43b) is thermally connected to the base plate (41) for providing a heat sink.

2. The superconducting harness (10) according to claim 1, wherein a width of the at least one superconducting tape (20) varies between the first end (20w) to the second end (20c).

3. The superconducting harness (10) according to claims 1 or 2, wherein part of the superconducting wire (25) has a meander-like shape.

4. The superconducting harness (10) according to any of the above claims 1 to 3, wherein the at least one contact block (43a, 43b) is made of copper.

5. The superconducting harness (10) according to any of the above claims 1 to 4, wherein the at least one base plate (41) is made of copper.

6. The superconducting harness (10) according to any of the above claims 1 to 5, wherein the connector (43a, 43b) is dimensioned to provide a heat sink.

7. The superconducting harness (10) according to any of the above claims 1 to 6, wherein an electrically insulating element (42) is provided between the at least one contact block (43a, 43b) and the base plate, wherein the electrically insulating element (42) is thermally conducting.

8. The superconducting harness (10) of claim 7, wherein the electrically insulating element (42) is made of aluminium nitride.

9. The superconducting harness (10) according to any of the above claims 1 to 8, wherein the jacket (31, 35) comprises a coating (31) and an encapsulation (35) for protecting the superconducting tape (20) against humidity and providing the superconducting tape (20) with mechanical strength.

10. The superconducting harness (10) according to claim 9, wherein the coating is made of Parylene or a derivative thereof.

11. The superconducting harness (10) according to claim 9 or 10, wherein the encapsulation is made of Kapton.

12. The superconducting harness (10) according to any of the above claims 9 to 11, wherein the encapsulation (35) comprises two layers and the superconducting wire (25) is laminated between the two layers.

13. The superconducting wire (25) according to any one of claims 1 to 12, wherein the superconducting cable (20, 31, 35) has at least in part a meander-like shape.

14. The superconducting wire (25) according to any one of claims 1 to 13, wherein the superconducting tape (20) comprises rare-earth barium copper oxide.

15. The superconducting wire (25) according to 14, wherein the rare-earth element in the rare-earth barium copper oxide is selected from the group consisting of yttrium (Y), gadolinium (Gd), samarium (Sm), or neodymium (Nd).

16. The superconducting wire (25) according to any one of claims 1 to 15, wherein the material, of which the at least one support element (60) is made, is selected depending on the temperature of the superconducting cable (20, 31, 35) at which the at least one support element (60) is arranged.

17. The superconducting wire (25) according to claim 16, wherein the material, of which the at least one support element (60) is made, is thermally conducting, when the at least one support element (60) is arranged at a position close to a cold end (20c) of the superconducting cable (20, 31, 35) to increase a thermal conductance of the at least one support element (60).

18. The superconducting wire (25) according to claim 16 or 17, wherein the material is thermally insulating, when the at least one support element (60) is arranged at a position close to a warm end (20c) of the superconducting cable (20, 31, 35) to increase a thermal resistance of the at least one support element (60).

FIG. 1

FIG. 2

FIG. 3

FIG. 4

FIG. 5

40w

422

45

451

43e

43c

43d

43a, 43b

47

421

41a

42

41

FIG. 6

40w

43c, 43d

45

451

41a

47

41

FIG. 7

40c

45

451

20

47

43g

43a, 43b

FIG. 8

60

61b

61c

36a

61c

36

61a

Europäisches
Patentamt

European
Patent Office

Office européen
des brevets

# EUROPEAN SEARCH REPORT

Application Number

EP 22 20 6774

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CANAVAN E R ET AL: "The Astro-H high temperature superconductor lead assemblies", CRYOGENICS, ELSEVIER, KIDLINGTON, GB, vol. 64, 27 June 2014 (2014-06-27), pages 194-200, XP029107178, ISSN: 0011-2275, DOI: 10.1016/J.CRYOGENICS.2014.06.003 | 1-6,9, 13,16 | INV. H02G15/34 B64D43/00 H01B12/06  ADD. H01B7/30 H01R9/26 |
| Y | * figure 2 * * paragraph [02.1] – paragraph [02.3] * | 10-12, 14,15 | H02G15/06 H01R9/24 |
| A | | 7,8,17, 18 | |
| | ––––– | | |
| X | EP 3 610 519 B1 (MICROSOFT TECHNOLOGY LICENSING LLC [US]) 26 May 2021 (2021-05-26) | 1,16 | |
| Y | * figures 1-17 * | 11,12 | |
| A | * paragraph [0006] – paragraph [0052] * | 13-15, 17,18 | |
| | ––––– | | |
| X | US 9 847 588 B2 (VARIAN SEMICONDUCTOR EQUIPMENT ASS INC [US]) 19 December 2017 (2017-12-19) | 1,16 | TECHNICAL FIELDS SEARCHED (IPC) |
| A | * figures 1-7 * * column 3, line 53 – column 8, line 56 * | 3-15,17, 18 | H02G H01B B64D H01R |
| | ––––– | | |
| Y | CHRIS S YUNG ET AL: "Magnesium Diboride Flexible Flat Cables for Cryogenic Electronics", IEEE TRANSACTIONS ON APPLIED SUPERCONDUCTIVITY, IEEE, USA, vol. 21, no. 3, 1 June 2011 (2011-06-01), pages 107-110, XP011324694, ISSN: 1051-8223, DOI: 10.1109/TASC.2010.2080655 * paragraph [0001] – paragraph [0005] * | 10 | |
| | ––––– | | |
| | –/-- | | |

The present search report has been drawn up for all claims

| Place of search | Date of completion of the search | Examiner |
|---|---|---|
| The Hague | 19 April 2023 | Braga, João |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2012/208702 A1 (KRAEMER SIMON [DE] ET AL) 16 August 2012 (2012-08-16) * paragraph [0011] * | 14,15 | |

TECHNICAL FIELDS
SEARCHED      (IPC)

The present search report has been drawn up for all claims

| Place of search | Date of completion of the search | Examiner |
|---|---|---|
| The Hague | 19 April 2023 | Braga, João |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

**EP 22 20 6774**

This annex lists the patent family members relating to the patent documents cited in the above-mentioned European search report.
The members are as contained in the European Patent Office EDP file on
The European Patent Office is in no way liable for these particulars which are merely given for the purpose of information.

**19-04-2023**

| Patent document cited in search report | | Publication date | Patent family member(s) | | | Publication date |
|---|---|---|---|---|---|---|
| EP 3610519 | B1 | 26-05-2021 | CN | 110494998 | A | 22-11-2019 |
| | | | EP | 3610519 | A1 | 19-02-2020 |
| | | | EP | 3745481 | A1 | 02-12-2020 |
| | | | US | 2018294401 | A1 | 11-10-2018 |
| | | | WO | 2018191041 | A1 | 18-10-2018 |
| US 9847588 | B2 | 19-12-2017 | CN | 107646158 | A | 30-01-2018 |
| | | | EP | 3298671 | A1 | 28-03-2018 |
| | | | JP | 6737811 | B2 | 12-08-2020 |
| | | | JP | 2018523293 | A | 16-08-2018 |
| | | | KR | 20180003620 | A | 09-01-2018 |
| | | | TW | 201707245 | A | 16-02-2017 |
| | | | US | 2016344113 | A1 | 24-11-2016 |
| | | | WO | 2016186831 | A1 | 24-11-2016 |
| US 2012208702 | A1 | 16-08-2012 | EP | 2487731 | A1 | 15-08-2012 |
| | | | KR | 20120092077 | A | 20-08-2012 |
| | | | US | 2012208702 | A1 | 16-08-2012 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CANAVAN et al.** *Cryogenics,* 2014, vol. 64, 194-200